# EUROPEAN PATENT SPECIFICATION

(11) **EP 2 115 661 B1**
(45) Date of publication and mention of the grant of the patent: **12.09.2012**
(21) Application number: 08709346.4
(22) Date of filing: 07.02.2008
(51) Int. Cl.: G06K 7/14, G06Q 20/00, G06Q 30/00

(54) **METHOD AND APPARATUS FOR DETECTING A TWO DIMENSIONAL DATA MATRIX**
VERFAHREN UND VORRICHTUNG ZUM DETEKTIEREN EINER ZWEIDIMENSIONALEN DATENMATRIX
PROCÉDÉ ET APPAREIL POUR DÉTECTER UNE MATRICE DE DONNÉES BIDIMENSIONNELLE

(30) Priority: 07.02.2007 GB 0702369; 29.08.2007 GB 0716717
(43) Date of publication of application: 11.11.2009
(73) Proprietor: Peachinc Limited, Beckenham Kent BR3 1HG (GB)
(72) Inventor: MORRIS, Daniel, Beckenham Kent BR3 1HG (GB); MANTOCK, Peter, Beckenham Kent BR3 1HG (GB)
(74) Representative: South, Nicholas Geoffrey
(86) International application number: PCT/GB2008/000444
(87) International publication number: WO 2008/096153

(56) References cited:
- GB-A- 2 420 894
- US-A- 5 726 435

## Description

The invention relates to the coding and decoding of information recorded in the form of a two dimensional barcode, or data matrix, the information being represented in the form of a grid of rows and columns of data cells. In particular, the invention relates to a method and apparatus for detecting and reading such recorded data, which may be displayed on any medium, but in particular for reading the data when displayed on a screen of an electronic device such as a mobile phone or personal digital assistant (PDA). The invention also relates to systems which utilise a transmittable two dimensional data matrix.

Conventional one dimensional barcodes are well known, and comprise a strip of parallel lines of differing widths to represent numerical values, thereby providing a numerical identifier which may be read using simple scanning technologies. Typical scanners operate by emitting a laser onto the surface provided with the barcode, and reading the light reflected from the surface.

More recently, two dimensional barcodes have been used, in which a larger amount of information can be recorded in a given space, by utilising a grid or matrix of black and white pixels, representing binary "0"s and "1"s, and encoding digital data into the pattern of pixels using various encoding techniques, which may include check digits used to verify that the code has been read correctly. An example two dimensional barcode may consist of a 10x10 matrix of black and white pixels. Typically, such two dimensional barcodes are read using a scanner similar to the conventional laser or image scanners used for one-dimensional barcodes.

In order for a scanner to locate a two dimensional barcode on a printed medium, a conventional system uses a border of black pixels along the length of at least the left and lower sides of the barcode grid, as well as a white border, or 'quiet zone', of at least 1.5 cell thicknesses around the entire barcode, such that the barcode reader will look for this arrangement of black lines and white border to identify, locate and orientate the barcode, in order to read the remaining data pixels.

It is well known to provide barcodes on paper and other printed media, but more recently applications have arisen in which it has become useful to display barcodes electronically on various types of displays, such as mobile phone or PDA screens. One example of such an application is in all electronic ticketing system. The applicant provides one such ticketing service, in which tickets may be purchased online for a variety of events such as cinema, sports, clubs, theatre, concerts or corporate events, and the user is provided with the ability to print the ticket, email the ticket or send the ticket as a Short Message Service (SMS) message to a mobile device instantly. Once a user has purchased a ticket for an event, the ticket can be taken to that specific event using any preferred medium. Upon entry to the event, the barcode on the printed ticket or on the screen of the mobile device is scanned. Each ticket is then validated against the servers of the ticketing provider, in order to verify the ticket.

In this type of application in particular, it has been found that a one dimensional barcode can only provide a limited number of unique identifiers, due to the restricted screen size on a mobile device, and conventional two dimensional barcodes can be difficult to read from a mobile screen. Although a larger number of pixels can be displayed with increasing screen resolution, the resulting barcodes can be too small to be accurately read using conventional scanning techniques. Furthermore, the size of barcode which can be transmitted to a mobile phone is generally limited by the relevant messaging protocols. Current protocols include, for example, Enhanced Messaging Service (EMS) messages, and Nokia (RTM) Smart Messaging. Most such protocols are restricted in the number of pixels which may be sent as an image, for example to around 60x24 pixels. It should also be noted that, where the primitives (or smallest readable data cells) within the matrix are larger than a single pixel, e.g. 4x4 pixels, in order to aid automated reading using a camera, this restricts the number of usable data cells even further, e.g. to around 15x6, making efficient use of space even more important.

Also, with reference to systems in which a barcode is used as an authentication method, it may be particularly important to avoid readings which equate to a 'false positive' identification, for example by using a system of check digits, but without significantly decreasing the frequency of obtaining a valid reading.

Furthermore, with particular reference to barcodes displayed on electronic screens, problems arise with reading barcodes using conventional barcode scanners, due to the surface of the screen often being highly reflective, making it difficult to read the displayed image in certain conditions. Furthermore, the screen of a mobile device such as a telephone is more likely to be scratched or wet, leading to reading errors.

Some systems use elaborate locator patterns, which may reduce number of false positive readings, but many of these use too much space to be used on a mobile device screen or other area with limited space, e.g. in SMS/EMS messages.

It is therefore an object of the invention to provide a method and apparatus which can read data which is encoded and displayed in a way which makes efficient use of the space available, whilst still enabling the location and orientation of a printed or displayed barcode to be determined by the barcode reading method and apparatus. Furthermore, it is desirable to provide a method and apparatus in which a barcode can be reliably read from an electronic display.

It is also an object of the invention to provide systems for utilising a data matrix which can be transmitted to, and read from, an electronic device.

US-A-5 726 435 discloses an optically readable two-dimensional code and a method and apparatus using the code, wherein the code consists of three positioning symbols, a data region, timing cells and an apex detecting cell. The shape of the whole code is a square having the same number of vertical and lateral cells. A scanning line passing through the center of each positioning symbol always gives a constant frequency component ratio irrespective of the scanning direction. For this reason, even if a rotational angle of the two-dimensional code is not certain, the specific frequency component ratio of each positioning symbol can be easily detected by executing only one scanning operation in a predetermined direction. Hence, the coordinates of the center of each positioning symbol can be easily found and the position of the two-dimensional code identified.

In this description, it should be noted that the expression 'barcode' is used to refer to a variety of types of data matrix of pixels, even where these do not include the lines used in a conventional one dimensional barcode.

### Summary of the Invention

The present invention provides a method for detecting a two-dimensional bar code pattern, as claimed in claim 1.

In the claimed method, the invention utilises a bar code pattern being in the form of a matrix of rows and columns of data cells of either a first or second colour representing encoded data bits, and containing a set of at least two predetermined locating symbols at predetermined positions within the bar code patiern. The bar code pattern is read by receiving a two-dimensional image containing the pattern, analysing the image to identify potential occurrences of the at least one locating symbol within the image, validating the potential occurrences of locating symbols to identify a set of locating symbols within the image, and identifying the location of the bar code pattern within the image on the basis of the positions of the identified locating symbols

The bar code pattern contains a set of at least two predetermined locating symbols at predetermined positions within the bar code pattern, and the validating step comprises analysing the potential occurrences of locating symbols to identify any set of occurrences whose size and relative positions within the image are consistent with the predetermined positions of the locating symbols within the bar code pattern, thereby identifying a set of locating symbols.

In one arrangement, the method or system carries out the steps of locating the data cells within the image on the basis of positions of the locating symbols, and decoding and outputting data stored in the encoded data bits.

The invention may use a data matrix, or barcode pattern, which stores data in a binary matrix, for example using an array of black and white cells, and is designed to store large numbers within an efficiently sized area.

The locating patterns may be made up of a pattern of cells of the matrix, but could potentially be patterns which do not conform to the matrix structure (e.g. a different kind of printed pattern or symbol), but which are easily optically detected.

At least one locating symbol comprises a region of at least one cell of the first colour directly surrounded by a continuous border of cells of the second colour, such as a 3x3 cell square having a single cell of the first colour at the centre, and the step of identifying potential occurrences of the locating symbols comprises identifying islands of the first colour in the image. The validating step then comprises checking the shape of the identified islands of the first colour. This leads to an arrangement in which the locating symbol uses an efficient space to generate an easily detectable bright spot, which is particularly advantageous, for example, when detecting a bar code pattern displayed on the screen of a portable electronic device, such as a mobile phone, using a camera. Furthermore, the locating symbols may be located at the very edge of an image and/or surrounded by data cells. When reading such a matrix from the screen of a mobile device, for example, the continuous border may merge with surrounding pixels or dark portions of the screen or the device itself, but the locating symbol(s) will still be detectable. In one embodiment of such an arrangement, the pattern may contain no more than three locating symbols, and the colour of the cells not forming the locating symbols is determined by the data content of the pattern. In other words, only the cells making up the first colour cell and its continuous border of the second colour are predetermined, and all the remaining cells are available for use as data encoding cells, or check cells. For example, no additional edge or border pattern of a particular colour is required. In a similar embodiment, no more than two such locating symbols are provided, and the remaining cells are determined by the data content of the pattern.

By using predetermined locating patterns or symbols at predetermined positions within the matrix, for example two locating symbols at opposite diagonal corners of the matrix, a relatively small number of cells are taken up in defining the location and orientation of the matrix. In particular, the same locating patterns can be used in at least two of the corners of the matrix, regardless of the overall size of a given matrix. This means that a larger matrix can be used if more data is required to be stored, but the number of cells dedicated to the locating patterns can remain the same. By contrast, with a conventional two dimensional barcode system in which a black border is required on at least two sides of the pattern, together with a further white border surrounding the entire barcode, the number of cells used for this location and orientation function will increase as the size of the matrix increases. The described arrangement therefore provides a more efficient utilisation of the available pixels than this conventional arrangement, as the size of the matrix increases, and can also be used without a 'quiet zone', such that the screen area of a mobile device can be more efficiently utilised, or in a printed application, for example, other printed material may appear directly adjacent to the data cells of the matrix.

The locating symbols may be predetermined independently of the size of the bar code pattern, such that the step of identifying potential occurrences of the locating symbol(s) within the image is carried out independently of the size of the bar code pattern. In this way, the same locating symbols can be used for different sizes of bar code pattern, leading to increased efficiency in the space taken up by the locating symbol(s), as the size of the bar code pattern increases.

The matrix may include check cells, which are used to verify the correct reading of the pattern. In particular, the check cells may include at least one of: column parity check cells; row parity check cells; and data region sum check cells, and may include all three of these check systems, whereby to allow the use of very simple and space efficient locating symbols whilst also sufficiently reducing the occurrence of false positive readings.

In another aspect, the invention provides an apparatus for carrying out the steps of the methods described above. The apparatus comprises a camera, or other means for receiving the image containing the bar code pattern, and processing means for analysing the image in accordance with the method, to locate and read the pattern.

### Brief Description of the Drawings

Embodiments of the invention will now be described in more detail, by way of example only, with reference to the accompanying drawings, in which:
Fig. 1 illustrates schematically the different areas of an example data matrix may be used in the invention;
Fig. 2 is an example of data written into a data matrix, including check digits;
Fig. 3 is an illustration of the actual appearance of the data matrix of Fig. 2 in a typical application, without grid lines; and
Fig. 4 shows schematically a flow chart of the process of locating and reading a two-dimensional data matrix in accordance with an embodiment of the invention.

### Detailed Description

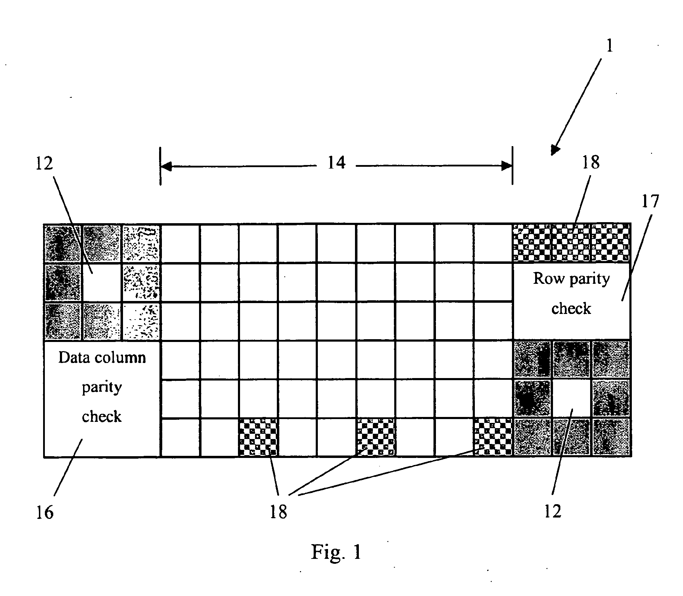

Figure 1 illustrates an example of a data matrix used in one embodiment of the invention. In this case, the matrix is a 15x6 pattern of cells, although other formats and sizes may be used. It should also be noted that the term 'cell' is used here to describe the smallest data portion of the pattern, which may be either black or white in this example, representing different binary data values (or may use other combinations of colours and/or greyscales in other examples), and therefore corresponds to a data pixel in a conventional two dimensional barcode. However, it should be appreciated that a cell may in fact be made up of more than one actual pixel of a display screen, such as a mobile phone screen. In particular, when the matrix is displayed on a mobile phone or similar device, the use of, for example, four or sixteen screen pixels to display each cell (i.e. a 2x2 or 4x4 block of pixels) ensures that the resulting image is large enough to be accurately read. Nevertheless, on a lower resolution screen, it may be appropriate for a single, larger pixel to be used as each cell of the matrix.

In Figure 1, the data matrix 1 comprises two locating patterns 12, at opposite diagonal corners of the matrix, a data area 14, and various check cells 16, 17, 18. In this case, the locating patterns each consist of a block of 9 cells, arranged as a 3x3 square, and the centre cell of each square has a different value from the bordering 8 cells. This results in a locating pattern which ensures an isolated cell of a particular colour, which is a particularly convenient pattern to identify when reading the matrix, as will be described later, and can in particular be identified by applying a simple binary thresholding operation. It should be noted that other locating patterns may be used, and more than the two diagonally opposed patterns may be used, for example locating patterns could be included at three or four corners of the matrix. Furthermore, the locating patterns may be larger or smaller than those shown, and may be of a different shape, although it is advantageous to use locating patterns which take up as few cells as possible, while still being easy to identify when reading the matrix. The locating patterns in a given matrix may also be the same or different from each other, although it is convenient to use only a single type of pattern, as will be explained later in connection with the reading of the matrix.

In the arrangement of Figure 1, only 18 cells in total are dedicated to the locating patterns, and this could be the same even if the overall size, and hence the number of data cells in the data area 14, were increased. Furthermore, the use of the 3x3 square locating pattern, with a single cell as the isolated centre of a particular colour, ensures a minimal use of space for the locating pattern. Since the single cell is the same size as an individual data cell representing an encoded data bit in the data portion of the pattern, this central cell of the locating pattern is effectively minimised to the smallest size that can be efficiently detected, i.e. the size chosen for each data cell. A further advantage of this arrangement is that the continuous border of the second colour around the isolated single cell may be directly adjacent to cells containing actual data in the pattern, or check cells, or even the edge of the pattern itself, since the detection of the locating pattern does not depend on cells beyond this continuous border having a particular colour. In other words, this minimally sized border is all that is required to ensure that the central cell of the locating pattern always appears as an isolated region of a first colour.

The locating patterns using an isolated region of a particular colour, and in particular the 3x3 square pattern, provide an effective and space-efficient locating pattern, which is particularly suitable for use in a bar code pattern in a limited space, such as on the screen of a portable device. Although more complex shapes may be employed in other systems to reduce the number of false positive readings, these simple but space-efficient locating patterns are made particularly effective in one embodiment of the invention, by using the described check digit systems (optionally a combination of row parity, column parity and data region sum checks, as discussed below), which allow very simple locating patterns to be used with sufficient resilience to false positive readings. The inventors have found that by combining these locating patterns and check systems, a particularly effective balance can be achieved between the space available for data content of the pattern in a limited pattern size, and effective resistance to false positive readings.

The check cells here comprise a mixture of data region sum check cells 18, data column parity check cells 16, and data row parity check cells 17. The data area 14 comprises an area of 9 columns and 6 rows, except for three of the sum check cells 18 which appear in the bottom row of the matrix.

Data is written in one of a variety of ways in the data area 14, and various coding schemes are known for representing data values by a system of binary '0's and '1's in the data area. For example, different cells may be assigned different values, and a '1' in a given cell (as represented by one of the two possible pixel colours, such as black and white) indicates the addition of the value of that cell to the values of the other cells set to a binary '1', to give a total data value represented by the matrix. It will be appreciated that the number of data cells provides a large number of unique data values which may be represented by the data matrix.

The check cells may be used in a variety of ways to verify the integrity of the data written in the data area, and many check systems are known in the art. In general terms, when the data is encoded to form the matrix, the various check cells take a particular value on the basis of the data, in accordance with the particular check system being adopted. When the matrix is subsequently read and decoded, the check cells can be verified to determine whether they are consistent with the read data.

In the present example, there are two validation processes: (i) a row/column odd/even number check; and (ii) a check sum.

The row/column parity check uses the nine data column parity check cells 16 to correspond to the nine columns in the data area 14, and to indicate whether the total number of binary '1' cells (e.g. black cells, in the case where a '1' is represented by a black cell and a '0' by a white cell) in the respective column is odd or even. For example, a binary '1' (or black) value in a parity check cell could indicate that the number of binary '1' cells in the corresponding column is odd, whereas a '0' in the check cell could indicate that the number of binary '1' cells in the corresponding column is even. In this way, the nine check cells can be compared with the data read from the columns of the data area, and any discrepancies would indicate a corruption or mis-reading of the matrix.

Similarly, the six data row parity check cells 17 correspond in this example to the six rows of the data area 14, and are each set to indicate whether total number of binary '1' cells the respective row is odd or even.

It will be appreciated that other permutations of check cell values may be used in implementing substantially the same check system, e.g. a binary '1' in a check can may be used to indicate an even, rather than odd, number of binary '1' cells in the respective row or column, and so on.

The check sum system uses data region check sum cells 18 to provide an additional check of the integrity of the data in the data region 14. In the present example, the six data region sum check cells 18 (three located on the bottom row of the matrix, and three in the top right hand corner in Fig. 1) are used to store a six bit number corresponding to the total number of cells of a given value (e.g. a binary '1') within the data area. For example, the data area 14 includes 51 data cells (a 9x6 matrix, minus the three check cells on the bottom row), and the six bit number represented by the six data region sum check cells 18 can take 64 different values.

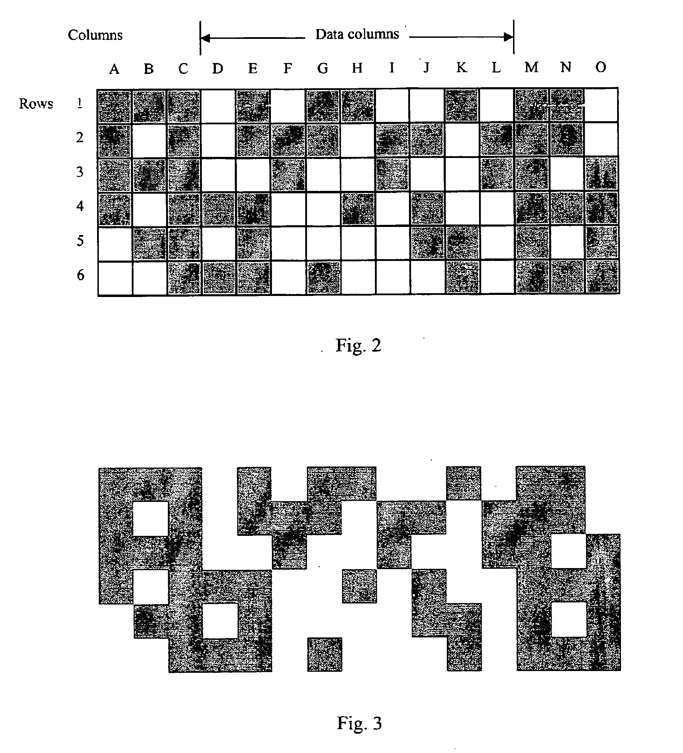

An example of actual data written into a data matrix is shown in Figs. 2 and 3. Fig. 2 illustrates schematically the grid structure of the matrix, with the rows labelled 1 to 9, and the columns labelled A to O, for convenience of reference to any cell. In the following description, individual cells will be referred to by their respective column and row labels, using the notation [column, row], so that for example [A, 1] refers to the top left cell.

Columns D to L correspond to the nine data columns 14, as shown in Fig. 1, although it should be noted that cells [F, 6], [I, 6] and [L, 6] of these columns are in fact used as sum check cells 18 in this example.

The locating patterns, or symbols, 12 are defined by the two groups of nine cells in diagonally opposite corners of the pattern, defined by columns A-C of rows 1-3, and columns M-O of rows 4-6. These locating patterns are predetermined, and will take the predetermined form irrespective of the data written in the data region. The values taken by the various check cells are determined by the data written in the data region. These consist of column parity check cells 16 (cells [A-C, 4-6] in Fig. 2), row parity check cells 17 (cells [M-O, 2-3] in Fig. 2) and data region sum check cells 18 (cells [F, 6], [I, 6], [L, 6] and [M-O, 1 in Fig. 2).

The cells in the data region 14 are written with binary '0's or '1's (represented here by white or black cells, respectively), depending on the particular data coding scheme being used, which will not be described further here. On the basis of the values of the data cells, the values of the check cells are written accordingly. In the present example, the column and row parity check cells show whether the number of black cells in a respective column or row is even or odd, with an even value being represented by a black parity cell, although it will be appreciated that this scheme could just as easily be implemented with a white parity cell representing an odd value. Column parity check cell [A, 4] in this case is assigned to represent column D, [B, 4] represents column E, [C, 4] represents column F, [A, 5] represents column G, and so on. Since column D contains two black cells (an even number), column parity check cell [A, 4] is black, and each other parity check cell is determined in the same way. The same scheme is used for the row parity check cells, of which [M, 2] represents the data region of row 1 (i.e. the number of black cells in the nine data cells [D-L, 1]), [N, 2] represents the data region of row 2, and so on. The last row parity check cell [O, 3] represents the data region of row 6, which excludes the sum check cells contained in this row, such that this parity check only relates to the data contained in the six data cells [D-E, 6], [G-H, 6] and [J-K, 6].

The sum check cells represent the total number of black cells in the data region 14, i.e. in columns D-L, excluding the sum check cells [F, 6], [I, 6] and [L, 6] themselves. Since the total number of black cells in this region is 24 in this example, this can be represented in the six sum check cells as the binary number 011000. In this particular example, the most significant bit is represented by the cell [O, 1], and the least significant bit by the cell [F, 6], such that the number 011000 is represented by black cells at [N, 1] and [M, 1], representing the second and third of the six bits respectively, and white cells in the remaining four sum check cells.

Fig. 3 shows how the data matrix of Fig. 2 would typically appear in practice, since the grid lines need not be provided.

The data matrix is designed to be read using an image recognition technique, rather than a conventional two dimensional barcode laser/image scanning technique, and for this reason it is possible to use the system of locating patterns, which may be optimised for optical recognition, by contrast with the black edges which are required for a conventional two dimensional barcode. The resulting matrix can easily be read using a conventional digital camera connected to a computer system, and can therefore utilise a standard CCD camera, or similar, e.g. a 'webcam', at very low cost, compared with the cost of a laser or image scanner. A digital imaging camera is also more effective than a laser scanner at reading the data matrix from an electronic display, since it does not suffer in the same way from problems with reflection from, for example, mobile phone screens.

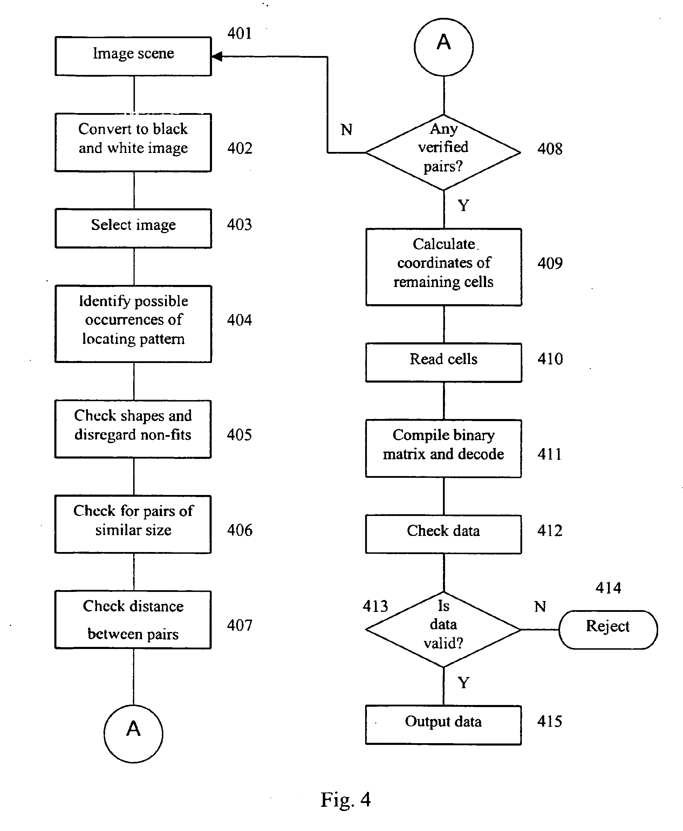

One particular method of reading the data matrix comprises the following steps, which are illustrated schematically in the flow chart of Fig. 4. First, the camera is used to image a scene which may contain a data matrix (step 401). For example, an image is captured from the camera when an item, such as a telephone screen or printed item, is within view of the camera. The image is read from the camera, transferred to processing means, and may be converted to several black and white images using different thresholds (step 402), and an appropriate image is selected (step 403). This may be done by selecting an image which exhibits a desired amount of contrast between dark and light areas. The image is then analysed by the processing means to identify possible occurrences of the locating pattern within the image (step 404). In this example, the image is analysed to identify 'islands' of a first colour, or bright spots, since the locating pattern has been designed to produce disconnected islands of a first colour, surrounded by a border of the second colour. This makes the locating patterns particularly easy to identify, in this example. A similar locating pattern might be employed which is an island of more than one cell, depending on the required size. Furthermore, a locating pattern might be used which is still an island of the first colour surrounded by a continuous border of the second colour, but which is elongated, or takes a more complex predetermined shape. In this case, possible occurrences of the locating pattern can still be identified by searching for bright spots, or islands of the first colour, but the locating patterns might be more easily distinguished from other naturally occurring patterns, such as light sources from light bulbs, etc, within the image.

Since a bright spot in the image may be merely a bright portion of the scene being imaged, or a white spot which does not form a part of the data matrix, each identified object which is a possible occurrence of the locating pattern is analysed to check whether it is roughly square, and objects which are determined not to be sufficiently square are disregarded (step 405). In other embodiments, locating patterns having more complex shapes might be used, in which case steps 404 and 405 may be combined into a single pattern recognition step.

The remaining objects are then searched for any two squares which meet the requirements that they are: (i) approximately the same size, to within a specified tolerance (step 406); and (ii) at an expected distance which is known on the basis of their size and the dimensions of the data matrix which is being detected (step 407). For example, if the matrix being read is a 15x6 matrix, as in Figure 1, then the relative positions of the two locating patterns 12 will be known, and can be used to check whether two identified square patterns might be part of the same data matrix. For example, if the two 9-cell locating patterns are correctly identified from a captured image, then it will be known that they should be a distance apart corresponding to 9 cells in the horizontal direction, and should be offset by 3 cells in the vertical direction. This relative positioning can then be checked relative to the size of the identified patterns themselves.

It should be noted that in the example of Fig. 3, there are three occurrences of the pattern which is used as the locating pattern, since a group of nine cells formed from some of the data cells and column parity check cells happen to form the same pattern at cells [C-E, 4-6] (see also Fig. 2). In this case, at least three possible occurrences of the locating pattern would be identified (and there may be even more bright spots in the background of the image, which are not part of the bar code pattern itself but which are identified as possible occurrences). These would be the nine-cell groups at cells [A-C, 1-3] (the 'first occurrence') and [M-O, 4-6] (the 'second occurrence'), which are in fact the actual locating patterns, and the group at cells [C-E, 4-6] (the 'third occurrence'), which is merely a chance occurrence of the same pattern. Since these patterus are all the same size, the distances between them would be checked for a valid positional relationship. As a result, it would be determined that the first and third occurrences are too close together, relative to their size, to constitute the corners of a 15x6 cell matrix, and this pair would be rejected. Similarly, the positional relationship between the second and third occurrences does not fit the known relationship between the locating patterns of the bar code pattern, and so this pairing would also be rejected. However, the positional relationship between the first and second occurrences would be determined to meet the positional requirements of the two locating patterns within the bar code pattern, and this pairing would be identified as a legitimate pair of locating patterns from the same bar code pattern, indicating the presence and position of the bar code matrix.

If no valid pairs are found (step 408), then the process returns to the beginning, and a new image may be analysed. If two objects are identified which meet the relative positional requirements, the coordinates of the remaining cells of the data matrix are then calculated (step 409), and each cell is then read by determining the colour (and hence binary value) of the cell at these coordinates (step 410). The results are then compiled into a binary matrix, and interpreted in accordance with the numerical coding technique which has been used to generate the data matrix (step 411).

In an alternative arrangement where only a single locating pattern is used in the matrix, the possible occurrences of the locating pattern may be validated by checking the shape of an identified bright spot, for example to check whether it is square, in the particular case where a square locating pattern is used. Alternatively other pattern recognition techniques may be applied in order to validate any other predetermined locating pattern.

In one arrangement, the results are checked using various validation processes (step 412), in order to determine whether the reading corresponds to a legitimate matrix, for example by using a system of check digits built into the matrix scheme, such as the check systems described above. If the data cannot be validated, then the reading is rejected (steps 413 and 414), whereas if the data is validated then the data can be outputted as appropriate (step 415).

It should be noted that in this example, the locating patterns at the diagonally opposite corners of the matrix could indicate the presence of the matrix in either of two different orientations, since the locating patterns and their positions within the matrix are 180 degree rotationally symmetrical. However, the correct orientation can be determined by reading the data and checking the check cells, in order to determine the orientation which produces a valid result. Similarly, in the case where a single square locating pattern is used, there may be four possible orientations which could each be checked for a valid result using the check cells. Alternatively, the locating patterns can be arranged so that their shape and/or relative position does not exhibit the same kind of symmetry.

The data matrix described in the foregoing description is particularly suitable for use in applications in which a data matrix or code is transmitted to a mobile device, such as a mobile telephone, PDA, or other suitable electronic device, in particular a portable or handheld device, and read from the screen of the device. Specific applications using the data matrix will now be described. It will be appreciated that references to a mobile device encompass any suitable device from which a received data matrix may be read. Furthermore, references to a mobile or cellular device number could include any kind of identifier for an electronic device or user, including for an example an email address, as long as the system is still able to operate in essentially the manner described. For example, a user could receive a data matrix in an email on a portable device, and display the matrix on the display of the device when validating the transmitted code at a suitable reader.

The applications set out below all advantageously utilise a data matrix reading apparatus which can be located at the premises of a relevant business, such as a vendor of a relevant product or service, a venue for an event, or at any other suitable location where a user will use the apparatus, depending on the particular application. The apparatus may comprise a form of kiosk, which may be branded or marked with any relevant indicia relating to a particular business, product or service. The term 'kiosk' will be used in the following description, but encompasses any suitable form of reading apparatus comprising a data matrix reader, and typically a display for conveying information to a user.

The kiosk typically includes a camera, such as a CCD camera for reading a data matrix presented by the user, for example from the display of a mobile device, as described above. The kiosk may comprise an aperture or other suitable location in or on the kiosk where the user may easily present a mobile device, or any form of printed or other suitable medium, displaying the data matrix to be read. The kiosk may also typically include some form of display means, such as an LCD display or other indicating means, for conveying information to the user, and may further include means for indicating successful reading of a data matrix to the user. For example, in one implementation, the kiosk may display a red light on the top of the device until a data matrix is presented to the kiosk and successfully read, at which point the light turns green to indicate successful reading of the matrix to the user. On successful reading of a data matrix, the display means may also display relevant information to the user.

The kiosk comprises, or is linked to, processing means for decoding the data matrix and taking appropriate further processing steps, such as retrieving stored information from a database on the basis of the information stored in the data matrix. The kiosk may, for example, be linked to a computer network, and may operate as a form of interface with a computer system operating the business processes of the vendor or venue where it is located (e.g. the ticketing system of a venue).

Specific applications for a data matrix reader or kiosk are set out below.

### Bid Ticketing Process

By using a data matrix which can be transmitted to, and read from, mobile devices, together with a kiosk or kiosks deployed at relevant locations, it is possible to implement a system in which key tickets to events can be auctioned to achieve a higher price dependent on demand, and can be issued by message to a mobile device and validated electronically at the venue. In the process, ticket touting is made more difficult.

Using an electronic ticketing system, when a ticket to an event or venue is purchased, a data matrix is generated and transmitted to the mobile device of the ticket holder/purchaser, for example in the form of an SMS message. When the data matrix contained in the message is displayed on the user's mobile device, it can be read at a kiosk at the venue, and validated against the appropriate computerised ticketing system, allowing the user to gain entry to the event or venue (or possibly allowing a paper ticket, or multiple tickets relating to a single booking, to be printed). Using this electronic ticketing system, it is possible to send electronic tickets in the form of a data matrix to a mobile device close to the time of the event, since the delivery time is almost instantaneous.

In the particular example described here, some tickets to an event are made biddable. In a typical example, an event has 20,000 tickets for sale at £100 each. With the ability to send tickets at the last minute, it is possible to reserve 1000 key seats within the ticketing system, and to set these seats up as biddable. Users can bid on these seats using any suitable auction format, and bids may close for example 24 hours before the event. The closing time for bids can be closer to the event than with conventional ticketing systems, due to the short delivery time.

The highest bidding customer, who wins the auction, is sent the ticket instantly to their mobile device, and can then validate the ticket using a kiosk at the venue, by presenting the mobile device displaying the received data matrix. It is also possible, when validating the ticket at the kiosk, to include additional security questions in order to ensure that the person presenting the data matrix is in fact the rightful ticket holder. Typically, for these purposes, the kiosk will include a display for presenting information and questions, and any appropriate form of input device for receiving information from the user. In this way, additional checks can be introduced which can ensure that ticket touts cannot sell tickets without proper authorisation.

It will be appreciated that by using the data matrix described in the foregoing description, a sufficient amount of data can be transmitted as a data matrix which is readable from the display of a mobile device, in order to implement this system in a convenient and secure manner.

A ticket normally selling for £100 could reach its market value of £1000 by implementing the bidding system, since corporate clients/VIPs like their customers to have key seats to an event.

The bid ticket system can severely hamper ticket touting, thereby pulling all venue and event money back to the promoters, aiding the industry and increasing the government's VAT and corporation tax revenue. By controlling ticket validation in this way, it becomes very difficult for the ticket tout to sell tickets.

As a variation of this system, a bid ticketing system may be used to sell tickets held by people who have genuine season tickets to events (e.g. annual sporting season tickets) but may not be able to attend on a particular occasion (e.g. a particular sporting fixture occurring during the year, which they would otherwise be entitled by their season ticket to attend). In this case, the season ticket holder can submit their season ticket to be part of the bid process, and the system can provide a unique validation code for that ticket and event date, so that a successful bidder can receive an electronic ticket and attend the event on the particular date in question. The season ticket holder can then continue to use their season ticket for other events.

In this way, revenue can be earned by the event organiser (e.g. a football club which is the issuer of the season ticket), and by the season ticket holder, and a commission can be earned by the electronic ticketing operator as the broker of the deal.

### SMS Money Transfer

The data matrix which can be transmitted by SMS (or equivalent messaging system) and read from the display of a mobile device, can also be used to implement a money transfer system, which will be described now.

The user deposits cash at any agent, outlet, or partner bank which is party to the described money transfer system. This may be done using a web interface at an automatic teller machine (ATM), or by any other appropriate means which can ensure that a payment is made by the user and recorded onto the transfer system. The transfer system is typically operated by processing means, such as a server, linked to the computer systems of the agents by a computer network.

The user supplies relevant details relating to the user and recipient, in the form of a transfer request. This information may include names, addresses, amount to be transferred, etc, and includes at least a mobile telephone or other cellular device number for the recipient. The collected information is stored securely using suitable storage means, such as on a secure server.

A secure code is generated by the processing means in the form of a data matrix, and is sent to the recipient's mobile phone, or other device, anywhere in the world, using the stored number for the recipient. The code may be sent by SMS, MMS, or other suitable means. Alternatively or additionally, it is possible to send an encrypted URL string to PDAs such as a Blackberry (RTM) device or any smartphone upon which the user can download the data matrix from a secure web server:

In an optional modification, to ensure the integrity of the transaction, a randomly generated PIN code is also automatically sent from the server to the sender's mobile device, in which case the sender's number will also form part of the information collected and stored on the server. For security, the PIN number, once generated, may not be known to the operators of the system, but is only stored on a secure server to be used to validate the transfer. The sender, when they are ready, will send this confirmation PIN code to the recipient's handheld device, or alternatively the sender can call the recipient and provide the required information. This introduces an additional security measure, in case the message containing the data matrix is intercepted or wrongly directed.

Once the recipient has all the details, (which will be a data matrix received on their mobile device and the required PIN number), the recipient can take their mobile device to the nearest agent which is participating in the transfer system, display the message containing the matrix, and have the device scanned using a kiosk.

Once the reader at the kiosk has read the displayed code, the system will perform a lookup on the secure servers and confirm the details of the transfer, such as amount of money being transferred, the user details, etc. Where the PIN code system is implemented, the recipient will be prompted to enter the PIN code using a suitable keypad or other means at the kiosk, and the PIN code will then be validated against the data stored on the secure server, in order to authenticate the transaction.

Once the recipient has entered required PIN, and the transfer has been authenticated, the recipient can collect the transferred cash from the agent, or the money can be paid to the recipient by any suitable means.

When the recipient has received the payment (e.g. by cash, cheque, or other means) the system may optionally send another SMS message to the sender confirming the payment/transfer of funds.

### Data Matrix Voucher

Many large retailers, in particular supermarkets, send out large quantities of discount voucher information by post per annum. In particular, where customer information is stored in connection with loyalty or reward schemes, retailers will often send promotional offers, product-specific discount coupons, or reward-based discount vouchers, targeted to each specific customer. By using a code in the form of a data matrix which can be transmitted by SMS and read from the display of a mobile device, a customer-specific code can be generated and transmitted to the customer's mobile device, in place of the existing paper mailing, as set out below.

The customer details and other relevant information are stored as in the conventional system, and the system generates voucher information for customers in the usual way, using appropriate processing means. However, instead of generating, printing and mailing vouchers or other documentation to the customer, the processing means generates a code unique to user, encoded as a data matrix, which is then sent by SMS or other suitable means, to the mobile device of the customer, using a number stored with the customer's other information (such as the customer's address, etc).

Having received the message containing the matrix, the customer can then display the message on the mobile device at any time when attending one of the retailer's stores, and have the displayed matrix read at a kiosk. The discount/voucher information specific to the customer is then retrieved from suitable storage means, and can be displayed to the customer, or printed out as appropriate. The information may be retrieved from the retailer's computer system, to which the kiosk may be linked, or data for discount vouchers, etc, may be updated periodically by other means, provided that the information available at the kiosk contains the necessary information to allow it to provide the relevant discounts or promotions relating to the store's product range.

Following identification of the customer to the system in this way, any type of interaction with the customer can then take place at the kiosk, and any necessary input and output devices can be provided as appropriate. Optionally, the customer can be required to present a store card or loyalty card at the kiosk, for extra validation. The kiosk may also be used to process refunds.

In an embodiment in which the kiosk is provided with a printer, vouchers or coupons for the shopping session may be printed from the kiosk. The printed vouchers can then use the barcode system in use by the store, which can then be easily read by the retailer's scanner. Printed discount vouchers can be redeemed by the customer at the checkout, when paying for purchased items, in the same way as if the vouchers had been printed and mailed to the customer in the usual manner.

The advantages of this system are that it is easy for the customer to use, and saves the retailers a lot of money in distribution and time. It can also be sponsored by product manufacturers offering promotions on particular products. Furthermore, the system will appeal to certain customers, and the kiosk may be provided with a display which can show advertisements to customers using the kiosk.

### Instant Tickets or Vouchers from TV Interactive Services

Different systems are described above for issuing various kinds of vouchers or tickets in the form of transmittable codes which can be received and displayed as a data matrix on the display of an electronic device, and read from such a display. It is further possible to integrate such a system with interactive television services provided by conventional satellite, cable or terrestrial television service providers.

It is well known, using current digital television services, to provide an interactive service in which the viewer can initiate additional information services related to the currently broadcast TV content. For example, a message or symbol may be displayed on screen, together with the TV programme content, inviting the viewer to press a button on the TV remote control in order to obtain more information or access other kinds of interactive content, generally related to the current programme or advertisement being transmitted. The interactive content may take the form of a competition entry or other form of promotion relating to a product or service.

In the presently described system, the viewer initiates an interactive service in any conventional way, for example by pressing a particular button on a remote control, in response to the presence of a corresponding on-screen symbol or message.

As part of the interactive service, the viewer is then invited to enter the number of their mobile telephone, or other mobile or electronic device which is capable of receiving a message by SMS, MMS or other suitable means. The number may be entered using the numbers on the remote control, or via some other form of on-screen menu, or the viewer's number could be selected from a list of stored information about the viewer. It is also possible in another embodiment that a different form of identifier could be used, such as an email address, as long as it can be used io transmit a code to the viewer.

The number, or other identifier, is then received by the system operating the interactive TV service, and provided to a suitable processing means operating the electronic ticket/voucher code system. For example, the interactive television system may be linked to the website server of the ticketing/voucher system. A code representing an electronic ticket or voucher related to the interactive service is generated by the processing means in the form of a data matrix, using relevant information about the event or promotion to which the interactive content relates, and is sent to the mobile telephone, or other electronic device, identified by the viewer.

The viewer can then use the electronic ticket or voucher, etc, as described previously, by taking it to an appropriate location (such as a relevant branch of a retail outlet, or a particular event venue), and have the received data matrix scanned at a kiosk or other reader, when the message is displayed on the telephone or other electronic device on which the message was received. In this way, a viewer might request a free sample of a product, for example, by pressing an interactive button on the TV remote control during an advertisement for the product to initiate an interactive service, entering their mobile telephone number using the remote control, and receive an SMS message containing a data matrix which can be read at a kiosk located at a local retailer's premises. On having the data matrix validated, the user may be able to collect the product sample from the kiosk, if the kiosk has been installed specifically as part of a product promotion, or alternatively collect a coupon printed at the kiosk, as described previously, which can be redeemed at the checkout of the store. It will be appreciated that this system can also be used to allow the user to gain admittance to an event or venue, or to redeem a voucher or ticket in other ways suitable to the product or service in question.

For product or service promotions, the provision of the interactive service will typically be paid for by the manufacturer or service provider.

However, the system may also be used to allow the viewer to purchase products or services, for example concert tickets. In this case, the system would be used substantially as described above, but the viewer could be billed for the product or service via their TV subscription package, using the same system as is conventionally used for paying for on-demand TV services, such as pay-per-view movies. In other words, the product or service ordered via the interactive TV service, and delivered by means of an electronic ticket sent to the viewer's phone or other electronic device, would be automatically charged to the viewer's monthly TV service bill.

The process of delivering tickets via interactive TV services can also be used extremely effectively in hotels, and can be integrated in a straightforward manner with hotels' in-house TV billing systems. The system can then be used to provide tickets for nearby events, which may be advertised on the hotel's in-house TV system, or by other means within the hotel. Such tickets can be delivered electronically to a guest's mobile telephone or other electronic device, and validated at a kiosk or other reader at the event location. Billing can take place in the same way as a hotel guest would be billed for a pay-per-view movie in their hotel room, via the hotel's billing system, and tickets for events or other services can then be added to the guest's hotel bill in a straightforward manner.

It will be appreciated that the above-described applications of a data matrix can be implemented in a particularly effective manner when using the two dimensional data matrix described in the foregoing description. However, other data matrix or data code systems may be used in these applications, as long as they are able to be transmitted as required, and read from the display of a mobile device, where necessary, and are able to include the required amount of encoded data (in order to provide a sufficiently secure code, etc).

## Claims

1. A method for detecting a two-dimensional bar code pattern (1) using a bar code pattern reader, the bar code pattern being in the form of a matrix of rows and columns of data cells of either a first or second colour representing encoded data bits, and containing a set of at least two predetermined locating symbols (12) at predetermined positions within the bar code pattern, wherein at least one locating symbol comprises a region of at least one cell of the first colour directly surrounded by a continuous border of cells of the second colour, wherein the method comprises the steps of:
receiving a two-dimensional image containing the pattern,
analysing the image to identify potential occurrences of the locating symbols within the image by identifying islands of the first colour in the image,
validating the potential occurrences of locating symbols by analysing the potential occurrences to identify any set of occurrences whose size and relative position within the image are consistent with the predetermined positions of the locating symbols within the bar code pattern, thereby identifying a set of locating symbols, and
identifying the location of the bar code pattern within the image on the basis of the positions of the identified locating symbols,
**characterised in that** the validating step comprises checking the shape of the identified islands of the first colour.

2. A method according to claim 1, wherein the locating symbol is square.

3. A method according to claim 1 or 2, wherein at least one locating symbol comprises a 3x3 cell square having a single cell of the first colour at the centre, and the remaining eight cells forming the continuous border of cells of the second colour.

4. A method according to claim 3, wherein the single cell of the first colour is the same size as an individual data cell representing an encoded data bit.

5. A method according to claim 3 or 4, wherein the continuous border is directly adjacent to data cells representing a data content of the pattern.

6. A method according to any preceding claim, wherein the bar code pattern contains no more than three locating symbols, and the colour of cells not forming the locating symbols is determined by a data content of the pattern.

7. A method according to any preceding claim, wherein the locating symbols (12) are predetermined independently of the size of the bar code pattern, and the step of identifying potential occurrences of the locating symbols within the image is carried out independently of the size of the bar code pattern.

8. A method according to any preceding claim, wherein the method further comprises:
locating the data cells within the image on the basis of positions of the locating symbols, and
decoding and outputting data stored in the encoded data bits,
and wherein the bar code pattern includes data check cells (16, 17, 18), and the method further comprises the step of validating the decoded data using values stored in the check cells.

9. A method according to claim 8, wherein the check cells include each of: column parity check cells (16); row parity check cells (17); and data region sum check cells (18).

10. A method according to any preceding claim, further comprising the step of generating the two-dimensional image using electronic imaging means.

11. A method according to claim 10, wherein the bar code pattern is displayed on the display of a portable electronic device.

12. A method according to any preceding claim, wherein the step of identifying potential occurrences of locating symbols comprises scanning the image using a pattern recognition technique.

13. Apparatus for detecting a two-dimensional bar code pattern (1), the apparatus comprising processing means arranged to carry out the steps of the method according to any of the preceding claims.

14. Apparatus according to claim 13, further comprising imaging means for generating the two-dimensional image containing the pattern.

## Patentansprüche

1. Verfahren zum Detektieren eines zweidimensionalen Barcode-Musters (1) unter Verwendung eines Barcode-Musterlesers, wobei das Barcode-Muster in Form einer Matrix von Reihen und Spalten von Datenzellen entweder einer ersten oder einer zweiten Farbe ist, die codierte Datenbits repräsentiert und einen Satz von zumindest zwei Vorbestimmten Lokalisierungssymbolen (12) an Vorbestimmten Positionen innerhalb des Barcode-Musters enthält, wobei zumindest ein Lokalisierungssymbol einen Bereich von zumindest einer Zelle der ersten Farbe umfasst, die direkt von einer kontinuierlichen Grenze von Zellen der zweiten Farbe umgeben ist, wobei das Verfahren folgende Schritte umfasst:
Empfangen eines zweidimensionalen Bilds, welches das Muster enthält,
Analysieren des Bilds, um mögliche Vorkommnisse der Lokalisierungssymbole innerhalb des Bilds durch Identifizierung von Inseln der ersten Farbe im Bild zu identifizieren,
Validieren der möglichen Vorkommnisse von Lokalisierungssymbolen durch Analysieren der möglichen Vorkommnisse, um irgendeinen Satz von Vorkommnissen zu identifizieren, dessen Größe und relative Position innerhalb des Bilds konsistent mit den Vorbestimmten Positionen der Lokalisierungssymbole innerhalb des Barcode-Musters sind, um dadurch einen Satz von Lokalisierungssymbolen zu identifizieren, und
Identifizieren der Position des Barcode-Musters innerhalb des Bilds auf der Basis der Positionen der identifizierten Lokalisierungssymbole,
**dadurch gekennzeichnet, dass** der Validierungsschritt Überprüfen der Form der identifizierten Inseln der ersten Farbe umfasst.

2. Verfahren nach Anspruch 1, wobei das Lokalisierungssymbol quadratisch ist.

3. Verfahren nach Anspruch 1 oder 2, wobei zumindest ein Lokalisierungssymbol ein 3x3 Zellenquadrat umfasst, das eine Einzelzelle der ersten Farbe in der Mitte aufweist und die restlichen acht Zellen die kontinuierliche Grenze von Zellen der zweiten Farbe bilden.

4. Verfahren nach Anspruch 3, wobei die Einzelzelle der ersten Farbe der gleichen Größe wie eine individuelle Datenzelle ist, die ein codiertes Datenbit repräsentiert.

5. Verfahren nach Anspruch 3 oder 4, wobei die kontinuierliche Grenze direkt an Datenzellen angrenzt, die einen Dateninhalt des Musters repräsentieren.

6. Verfahren nach einem beliebigen vorhergehenden Anspruch, wobei das Barcode-Muster nicht mehr als drei Lokalisierungssymbole enthält und die Farbe von Zellen, die nicht die Lokalisierungssymbole bilden, durch einen Dateninhalt des Musters bestimmt wird.

7. Verfahren nach einem beliebigen vorhergehenden Anspruch, wobei die Lokalisierungssymbole (12) unabhängig von der Größe des Barcode-Musters vorbestimmt werden und der Schritt der Identifizierung möglicher Vorkommnisse der Lokalisierungssymbole innerhalb des Bilds unabhängig von der Größe des Barcode-Musters ausgeführt wird.

8. Verfahren nach einem beliebigen vorhergehenden Anspruch, wobei das Verfahren weiter umfasst:
Lokalisieren der Datenzellen innerhalb des Bilds auf der Basis von Positionen der Lokalisierungssymbole, und
Decodieren und Ausgeben von Daten, die in den codierten Datenbits gespeichert sind,
und, wobei das Barcode-Muster die Datenprüfzellen (16, 17, 18) einschließt und das Verfahren weiter den Schritt der Validierung der decodierten Daten unter Verwendung von Werten umfasst, die in den Prüfzellen gespeichert sind.

9. Verfahren nach Anspruch 8, wobei die Prüfzellen jeweils einschließen: Paritätsprüfungszellen (16) für Spalten; Paritätsprüfungszellen (17) für Reihen; und Summenprüfungszellen (18) für Datenregionen.

10. Verfahren nach einem beliebigen vorhergehenden Anspruch, das weiter den Schritt Generieren des zweidimensionalen Bilds unter Verwendung elektronischer Imaging-Mittel umfasst.

11. Verfahren nach Anspruch 10, wobei das Barcode-Muster auf dem Display eines tragbaren elektronischen Geräts angezeigt wird.

12. Verfahren nach einem beliebigen vorhergehenden Anspruch, wobei der Schritt Identifizierung möglicher Vorkommnisse von Lokalisierungssymbolen das Scannen des Bilds unter Verwendung von Mustererkennungstechnik umfasst.

13. Vorrichtung zum Detektieren eines zweidimensionalen Barcode-Musters (1), wobei die Vorrichtung Verarbeitungsmittel umfasst, die eingerichtet sind, die Schritte der Verfahren in Übereinstimmung mit beliebigen der vorhergehenden Ansprüche auszuführen.

14. Vorrichtung nach Anspruch 13, die weiter Imaging-Mittel zum Generieren des zweidimensionalen Bilds umfasst, welches das Muster enthält.

## Revendications

1. Procédé de détection d'un motif de code barres bidimensionnel (1) au moyen d'un lecteur de motif de code barres, le motif de code barres ayant la forme d'une matrice de lignes et de colonnes de cellules de données d'une première ou d'une seconde couleur représentant des bits de données codés, et contenant un ensemble d'au moins deux symboles de localisation prédéterminés (12) à des positions prédéterminées dans le motif de code barres, dans lequel au moins un symbole de localisation comprend une région d'au moins une cellule de la première couleur directement entourée d'une bordure continue de cellules de la seconde couleur, le procédé comprenant les étapes suivantes :
réception d'une image bidimensionnelle contenant le motif,
analyse de l'image pour identifier des occurrences potentielles des symboles de localisation dans l'image en identifiant des îlots de la première couleur dans l'image,
validation des occurrences potentielles de symboles de localisation en analysant les occurrences potentielles afin d'identifier tout ensemble d'occurrences dont la taille et la position relative dans l'image sont cohérentes avec les positions prédéterminées des symboles de localisation dans le motif de code barres, identifiant ainsi un ensemble de symboles de localisation, et
identification de la position du motif de code barres dans l'image en fonction des positions des symboles de localisation identifiés,
**caractérisé en ce que** l'étape de validation comprend la vérification de la forme des îlots identifiés de la première couleur.

2. Procédé selon la revendication 1, dans lequel le symbole de localisation est carré.

3. Procédé selon la revendication 1 ou 2, dans lequel au moins un symbole de localisation comprend un carré de 3x3 cellules ayant une seule cellule de la première couleur au centre, et les huit autres cellules formant la bordure continue de cellules de la seconde couleur.

4. Procédé selon la revendication 3, dans lequel la seule cellule de la première couleur est de la même taille qu'une cellule de données individuelle représentant un bit de données codé.

5. Procédé selon la revendication 3 ou 4, dans lequel la bordure continue est directement adjacente aux cellules de données représentant un contenu de données du motif.

6. Procédé selon l'une quelconque des revendications précédentes, dans lequel le motif de code barres ne contient pas plus de trois symboles de localisation, et la couleur des cellules ne formant pas les symboles de localisation est déterminée par un contenu de données du motif.

7. Procédé selon l'une quelconque des revendications précédentes, dans lequel les symboles de localisation (12) sont prédéterminés indépendamment de la taille du motif de code barres, et l'étape d'identification d'occurrences potentielles des symboles de localisation dans l'image est effectuée indépendamment de la taille du motif de code barres.

8. Procédé selon l'une quelconque des revendications précédentes, le procédé comprenant en outre :
la localisation des cellules de données dans l'image en fonction des positions des symboles de localisation, et
le décodage et la production en sortie des données mémorisées dans les bits de données codés,
et dans lequel le motif de code barres comporte des cellules de vérification de données (16, 17, 18), et le procédé comporte en outre l'étape de validation des données décodées au moyen des valeurs mémorisées dans les cellules de vérification.

9. Procédé selon la revendication 8, dans lequel les cellules de vérification comportent à raison d'une de chaque type : des cellules de vérification de parité de colonne (16) ; des cellules de vérification de parité de ligne (17) ; et des cellules de vérification de somme de région de données (18).

10. Procédé selon l'une quelconque des revendications précédentes, comprenant en outre l'étape de génération de l'image bidimensionnelle avec un moyen d'imagerie électronique.

11. Procédé selon la revendication 10, dans lequel le motif de code barres est affiché sur l'affichage d'un dispositif électronique portable.

12. Procédé selon l'une quelconque des revendications précédentes, dans lequel l'étape d'identification d'occurrences potentielles de symboles de localisation comprend le balayage de l'image avec une technique de reconnaissance de motifs.

13. Appareil de détection d'un motif de code barres bidimensionnel (1), l'appareil comprenant un moyen de traitement agencé pour exécuter les étapes du procédé selon l'une quelconque des revendications précédentes.

14. Appareil selon la revendication 13, comprenant en outre un moyen d'imagerie pour générer l'image bidimensionnelle contenant le motif.
